# FASCICULE DE BREVET EUROPEEN

(11) **EP 2 067 935 B1**
(45) Date de publication et mention de la délivrance du brevet: **10.03.2021**
(21) Numéro de dépôt: 08150553.9
(22) Date de dépôt: 23.01.2008
(51) Int. Cl.: F01K 13/00, F01K 23/06, F01K 23/10, F01K 23/08

(54) **Procédé d'optimisation énergétique d'un site comprenant une cogénération et une centrale thermique**
Verfahren zur energetischen Optimierung eines Standorts, der ein Blockheizkraftwerk und ein Wärmekraftwerk umfasst
Method of energy optimisation on a site including cogeneration and a thermal power station

(30) Priorité: 25.01.2007 FR 0752875
(43) Date de publication de la demande: 10.06.2009
(73) Titulaire: L'Air Liquide Société Anon. à Directoire et Conseil de Surveillance pour l'Etude et l'Exploitation des Procédés Georges Claude, 75321 Paris Cedex 07 (FR)
(72) Inventeur: Poline, Tanguy, 94370, Sucy en Brie (FR)
(74) Mandataire: Air Liquide

(56) Documents cités:
- WO-A-96/36792
- JP-A- 6 257 413
- US-A- 4 555 906
- US-A- 4 819 436
- US-A- 4 961 311

## Description

La présente invention concerne un procédé d'optimisation énergétique d'un site de production d'énergie et de chaleur mettant œuvre une unité de cogénération et une centrale thermique.

Document US4961311A décrit un procédé de production d'énergie mettant en oeuvre un cycle combiné.

Les grands sites industriels utilisent les commodités de base que sont, d'une part, l'énergie mécanique ou électrique et, d'autre part, la chaleur (vapeur ou eau chaude). Sur de nombreux sites, ces commodités sont produites par des unités de cogénération et des centrales thermiques.

Un but de la présente invention est de proposer l'intégration d'un train de cogénération avec chaudière de récupération de chaleur et d'une centrale thermique voisine de manière à optimiser le rendement énergétique global.

Dans ce but l'invention concerne, un procédé de production d'énergie et de chaleur selon la revendication 1.

L'invention concerne donc un procédé mis en oeuvre sur un site industriel comprenant au moins une unité de cogénération. L'unité de cogénération comprend une turbine à gaz produisant de l'énergie mécanique ou électrique par détente de gaz de combustion. La chaleur de ces gaz de combustion est récupérée dans une unité de récupération de chaleur destinée à produire de la vapeur d'eau ou de l'eau chaude. Cette unité de récupération de chaleur est généralement une chaudière dans laquelle la chaleur des gaz de combustion de la turbine à gaz chauffe l'eau introduite dans la chaleur. Les gaz de combustion de la turbine peuvent également être utilisés comme comburant s'ils contiennent encore de l'oxygène et si un combustible est introduit dans l'unité de récupération de chaleur ; on parle alors de post-combustion. Généralement, l'unité de récupération de chaleur est alimentée par une eau déjà chaude ; par "eau chaude", on entend une eau présentant une température d'au moins 105°C.

Sur le site industriel, on trouve également une centrale thermique. Par "centrale thermique", on entend tout moyen de production de chaleur sous forme d'eau chaude ou de vapeur par chauffage d'eau par combustion d'un combustible et d'un comburant. Il s'agit en général d'une chaudière. Cette chaudière peut être indépendante, c'est le cas de la chaudière d'une unité de production de vapeur, ou liée à un autre procédé, c'est le cas d'une autre unité de récupération de chaleur d'une unité de cogénération. La centrale thermique est alimentée par de l'eau préchauffée par un dégazeur. Le dégazeur permet de mettre en contact l'eau à préchauffer avec de la vapeur d'eau de manière à préchauffer l'eau et simultanément éliminer l'oxygène dissous dans cette eau. Le dégazeur utilise de la vapeur d'eau qui peut être dérivée de la vapeur produite par l'unité de récupération de chaleur de l'unité de cogénération ou par la centrale thermique. Selon l'invention, le dégazeur de la centrale thermique est alimenté par une eau froide de température inférieure à la température de l'eau alimentant l'unité de récupération de chaleur de l'unité de cogénération. Selon l'invention, il est préférable que la température de l'eau froide alimentant le dégazeur de la centrale thermique soit inférieure d'au moins 10 °C, de préférence d'au moins 20°C, à la température de l'eau alimentant l'unité de récupération de chaleur de l'unité de cogénération.

Selon le procédé de l'invention, l'eau froide alimentant le dégazeur est préchauffée par échange de chaleur avec l'eau alimentant l'unité de récupération de chaleur de l'unité de cogénération.

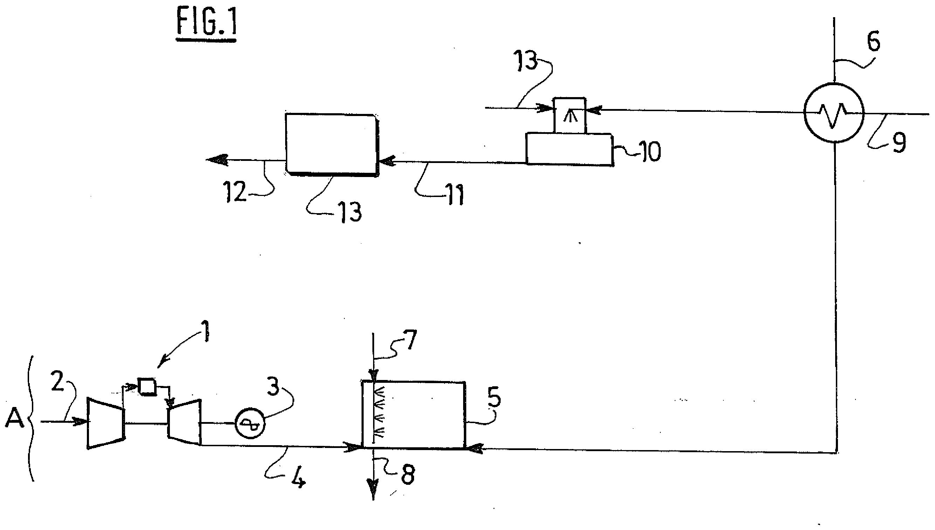

L'invention est illustrée par la figure 1. Le site industriel illustré comprend une unité de cogénération A composée :
- d'une turbine à gaz 1 alimentée par un combustible 2 et produisant de l'énergie mécanique ou électrique 3 et des fumées de combustion chaudes 4, et
- d'une unité de récupération de chaleur 5 récupérant la chaleur des fumées de combustion 4 pour vaporiser de l'eau chaude 6. Cette eau chaude 6 est également vaporisée dans l'unité de récupération de chaleur 5 par combustion d'un combustible 7 et de l'oxygène restant dans les fumées de combustion 4. L'unité de récupération de chaleur 5 produit de la vapeur 8.

Le site comprend aussi une centrale thermique alimentée en eau chaude 11 de manière à produire de la vapeur 12. L'eau chaude 11 est obtenue successivement par :
- chauffage par échange de chaleur entre, d'une part, l'eau froide 9 de la centrale thermique et, d'autre part, l'eau chaude 6 qui alimente l'unité de récupération de chaleur, puis
- chauffage de cette eau 9, déjà préchauffée, dans un dégazeur 10 alimenté en vapeur d'eau 13.

La vapeur d'eau 13 utilisée dans le dégazeur 10 pour le chauffage de l'eau froide 9 de la centrale thermique B est de préférence une vapeur de basse ou moyenne pression dérivée des vapeurs haute pression 12 et 8 produites par l'unité de récupération de chaleur 5 et la centrale thermique B.

Le procédé selon l'invention permet de réduire la consommation de vapeur d'eau du dégazeur nécessaire au chauffage de l'eau froide de la centrale thermique en récupérant la chaleur de l'eau chaude destinée à alimenter l'unité de récupération de chaleur de l'unité de cogénération. Simultanément, il n'a été observé qu'une très légère baisse de production de vapeur par l'unité de récupération de chaleur de l'unité de cogénération

L'invention a été mise en oeuvre sur un site industriel reproduisant le schéma de la figure 1. La température de l'eau destinée à être introduite dans l'unité de récupération de chaleur de l'unité de cogénération était de 148°C et la température de l'eau froide destinée à être introduite dans le dégazeur de la centrale thermique était de 81°C. Un échange de chaleur entre ces deux fluides a été mis en œuvre de manière à amener la température de l'eau froide destinée à être introduite dans le dégazeur de la centrale thermique à 114°C et la température de l'eau destinée à être introduite dans l'unité de récupération de chaleur de l'unité de cogénération à 88°C. Du fait du préchauffage de l'eau froide destinée à être introduite dans le dégazeur de la centrale thermique, il a été possible d'économiser 12 t/h de vapeur d'eau à 4 bar de pression pour le chauffage de cette eau. En contrepartie, l'unité de récupération de chaleur de l'unité de cogénération a baissé sa production de vapeur d'eau à haute pression de 105 t/h à seulement 103,5 t/h.

## Revendications

1. Procédé de production d'énergie et de chaleur mettant en œuvre :
- une unité de cogénération (A) comprenant :
- une turbine à gaz (1) produisant de l'énergie (3) et des fumées de combustion 4), et
- une unité de récupération de chaleur (5) alimentée en eau (6) et mettant en œuvre le chauffage de ladite eau (6) par récupération de la chaleur des gaz de combustion (4) de la turbine à gaz (1),
- une centrale thermique voisine alimentée par de l'eau (11)
préchauffée par un dégazeur (10), ledit dégazeur étant alimenté par une eau froide (9) de température inférieure d'au moins 10°C à la température de l'eau (6) alimentant l'unité de récupération de chaleur (5) de l'unité de cogénération (A), et dans lequel l'eau froide (9) alimentant le dégazeur (10) de la centrale thermique voisine, avant d'être préchauffée par le dégazeur (10), est préchauffé par échange de chaleur avec l'eau (6) alimentant l'unité de récupération de chaleur (5) de l'unité de cogénération (A) avec le dégazeur (10) utilisant de la vapeur d'eau (13) dérivée de la vapeur (8,12) produite par l'unité de récupération de chaleur de l'unité de cogénération (A) ou par la centrale thermique voisine.

## Patentansprüche

1. Verfahren zur Produktion von Energie und Wärme unter Verwendung von:
- einer Einheit (A) zur gleichzeitigen Erzeugung mehrerer nutzbarer Energiearten, umfassend:
- eine Gasturbine (1), die Energie (3) und Verbrennungsabgase (4) produziert, und
- eine Wärmerückgewinnungseinheit (5), die mit Wasser (6) gespeist wird und durch Rückgewinnung der Wärme aus den Verbrennungsgasen (4) der Gasturbine (1) das Wasser (6) erhitzt,
- ein benachbartes Heizkraftwerk, das mit durch einen Entgaser (10) vorerhitztem Wasser (11) gespeist wird, wobei der Entgaser mit kaltem Wasser (9) bei einer Temperatur, die mindestens 10 °C unter der Temperatur des die Wärmerückgewinnungseinheit (5) der Einheit (A) zur gleichzeitigen Erzeugung mehrerer nutzbarer Energiearten speisenden Wassers (6) liegt, gespeist wird und wobei das den Entgaser (10) des benachbarten Heizkraftwerks speisende kalte Wasser (9) vor dem Vorerhitzen durch den Entgaser (10) durch Wärmeaustausch mit dem die Wärmerückgewinnungseinheit (5) der Einheit (A) zur gleichzeitigen Erzeugung mehrerer nutzbarer Energiearten speisenden Wasser (6) vorerhitzt wird,
wobei im Entgaser (10) aus dem von der Wärmerückgewinnungseinheit der Einheit (A) zur gleichzeitigen Erzeugung mehrerer nutzbarer Energiearten oder dem benachbarten Heizkraftwerk produzierten Dampf (8, 12) abgezweigter Wasserdampf (13) verwendet wird.

## Claims

1. Method of generating power and heat, employing:
- a cogeneration system (A) comprising:
- a gas turbine (1) generating power (3) and combustion gases (4) and
- a heat recovery unit (5) fed with water (6) and heating said water (6) by recovering the heat from the combustion gases (4) coming from the gas turbine (1),
- a neighbouring thermal power plant fed with water (11) preheated by a degasifier (10), said degasifier being fed with cold water (9) at a temperature at least 10°C below the temperature of the water (6) feeding the heat recovery unit (5) of the cogeneration system (A), and in which the cold water (9) feeding the degasifier (10) of the neighbouring thermal power plant, before being preheated by the degasifier (10), is preheated by heat exchange with the water (6) feeding the heat recovery unit (5) of the cogeneration system (A),
with the degasifier (10) using steam (13) derived from the steam (8, 12) produced by the heat recovery unit of the cogeneration system (A) or by the neighbouring thermal power plant.
